(19) Europäisches Patentamt
European Patent Office
Office européen des brevets

(11) Veröffentlichungsnummer: **0 017 627**
**A1**

# (12) EUROPÄISCHE PATENTANMELDUNG

(21) Anmeldenummer: 80830013.1

(22) Anmeldetag: 13.03.80

(51) Int. Cl.³: A 01 B 15/00

(30) Priorität: 03.04.79 IT 121279

(43) Veröffentlichungstag der Anmeldung: 15.10.80 Patentblatt 80/21

(84) Benannte Vertragsstaaten: BE CH DE FR GB NL SE

(71) Anmelder: SAIMA S.p.A. di Dottorini & C.
Frazione INDICATORE 60
I-52100-Arezzo(IT)

(72) Erfinder: Dottorini, Oscar
Via Montecassino 8
I-06012-Città Di Castello Perugia(IT)

(74) Vertreter: Sneider, Massimo
Lenzi & C. Via del Tritone 201
I-00187 Rom(IT)

## (54) Pflug mit Hilfsschubmechanismus.

(57) Pflug an den von hinten oder seitlich eine Schubraupenkette - oder gleichwertiger Mechanismus - angebracht ist, die von der Zugmaschine aus angetrieben wird, um die Kraftanstrengung der Raeder auf den Ackerboden zu reduzieren und somit das Abrutschen zu verhindern und damit auch einen besseren Einsatz der Potenz des Traktors herbeizufuehren, wodurch der Einsatz von leichteren Zugmaschinen fuer die Ausfuehrung von tiefen Furchen moeglich ist.

./...

EP 0 017 627 A1

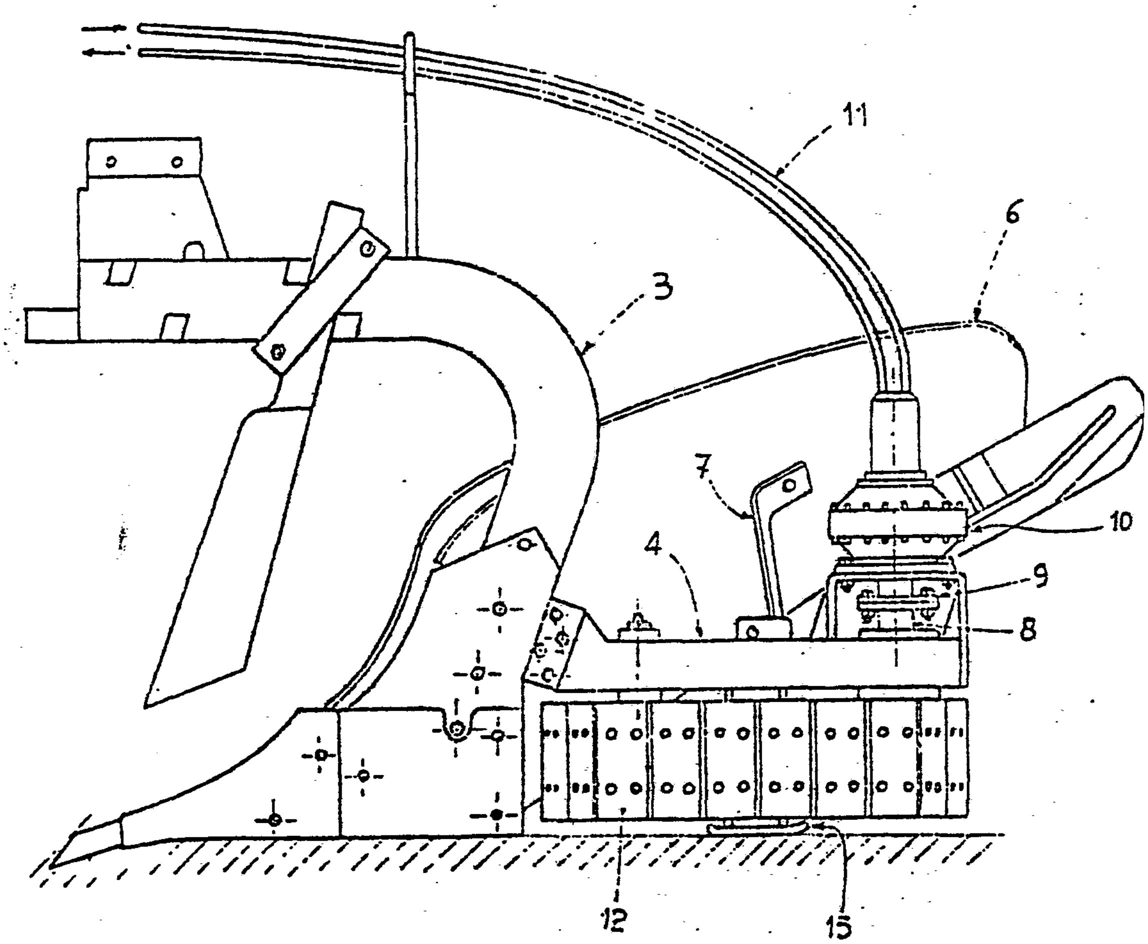


Fig.1

findung ersetzt durch eine Antriebsbewegung, die nicht nur die Beanspruchung auf den Kurbeltrieb reduziert, der von Pflug mit der Zugmaschine verbindet sondern auch eine geringere Vorschubkraft durch die Zugmaschine auf den Boden erfordert, wodurch diese erleichetet werden kann bei gleicher Leistung. Damit wird es moeglich, auch eine Zugmaschine mit Raedern einzusetzen auf den Boeden, auf denen bisher nur Raupenkettenfahrzeuge einsatzfaehig waren.

Die Raupenkette, oder ein entsprechendes gezahntes Geraet, kann auch auf dem Grund der Furche arbeiten oder neben dem Pflug je nach Einsatzbedarf; es aendert sich nur das System der Befestigung an den Pflug und der Mechanismus ruft auf alle Faelle eine Schub hervor, der ausser der Reduzierung des Kraftaufwands durc die Zugmaschine auf den Boden und der Belastung auf den Kurbeltrieb, der die Zugmaschine selbst mit dem Pflug verbindet, die Direktionsstabilitaet des Steuerns erleichtert und groesste Manoevrierbarket der Zugmaschine zulaesst.

In der fuer besonders vorteilhaft angesehenen Loesung, ohne jedoch andere Applikationen auszuschliessen, die sich nicht von dem Grundkonzept dieser Erfindung entfernen, besteht der Schubmechanismus aus einer Raupenkette, die horizontal zwischen dem Streichblatt und dem Boden der Furche angebracht ist in einer derartigen Position, dass der aktive Arm des Zahnrings den Furchenboden mit seinen Reibungsrippen angreift.

An das Gestell oder Fahrwerk der Raupenkette ist an den nach unten liegenden Teil ein Schlitten angebracht, der die Raupenkette selbst stuetzt, damit das Gewicht nicht die Schar nach oben verzieht und damit nicht die Sohlen waehrend der Rotation

- -

## TEXT DER BESCHREIBUNG

Beschreibung des Patents fuer eine Industrieorfindung mit dem Titel: 'Pflug mit Hilfsschubmechanismus' der Firma S.A.I.M.A. S.p.A. von Dottorini & Co., mit Sitz in Arezzo, fraz. Indicatore Nr. 60.

- - - - - - - - - - - -

Dieses Patent bezieht sich auf einen Pflug, an den ein Hilfsschubmechanismus angebracht ist. Dieser besteht - vorzugsweise, aber nicht unbedingt - aus einer kleinen Raupenkette, die an den hinteren Teil des Pfluganker angebracht ist oder auch seitlich - und aus Stabilitaetsgruenden - vorzugsweise an das Streichbrett, damit der Mechanismus, der von hinten oder seitlich arbeitet, einen Schub hervorruft und die Vorwaertsbewegung beguenstigt.

Die Antriebswelle der Raupenkette, oder des entsprechenden Mechanismus, wird vorzugsweise entweder durch einen oeldynamischen Motor angetrieben, der von der Zugmaschine aus kontrolliert wird oder durch eine mechanische Transmissione ueber die Kupplung der Zugmaschine den Antrieb empfaengt ueber einen geeigneten Geschwindigkeitsregler.

Die Raupenkette, oder ein entsprechendes gezahntes Geraet, arbeitet in einer vorteilhaften Loesung mit ihren Zaehnen am Boden der Furche und ersetzt damit - unter dem Aspekt der Richtungsbeweglichkeit - die Verschleissplatte, die somit reduziert wird und nur auf dem Teil neben der Schar erscheint.

Die Bremswirkung, die durch die Verschleissplatte hervorgerufen wird, die gegen den Boden der durch das Streichbrett umgeworfenen Erdscholle gedrueckt wird, wird so im Fall dieser Erden Boden der Furche angreifen und dadurch die Reibung erhoehen, die die Vorteile dieses Schubmechanismus aufheben wuerde.

An die Antriebswelle der Raupenkette ist ein hydraulischer Motor verzapft, der mit der Fluessigkeit des Oeldynamiksystems des Traktors versorgt wird im Fall einer oeldynamischen Transmission waehrend ein Abzweigungsgehaeuse oder aehnliches rechtwinklig angebracht ist , um die Drehbewegung der Wellen, die mit dem Kurbeltrieb der Zugmaschine verbunden sind, auf die Antriebswelle der Raupenkette selbst zu uebertragen.

Die Erfindung ist jedoch leichter zu verstehen, wenn die detaillierte folgende Beschreibung verfolgt wird und die Zeichnungen des beigefuegten Blatts, die ein praktisches Beispiel der vorzuziehenden Ausfuehrung der Erfindung sind.

In den Zeichungen betrifft die Fig. 1 die Vorderansicht der Erfindung in der vorzuziehenden Ausfuehrungsloesung waehrend die Fig. 2 die Erfindung von oben darstellt.

In den Zeichnungen ist der Anker des Pflugs mit 3 bezeichnet, an den das Tragegestell 4 der Raupenkette mit entsprechenden Bolzen und Buegeln angebracht ist, waehrend 6 das Streichbrett des Pflugs ist, an das seitlich, mit der Stuetze 7, der mittlere Teil des Tragegestells 4 angebracht ist.

An die Antriebswelle 8 der Raupenkette ist mit der Flange 9 der Hydraulikmotor angekuppelt, der durch die flexiblen Hochdruckschlaeuche 11 versorgt wird, die vom Oeldynamiksystem der Zugmaschine kommen, die nicht in den Zeichnungen wiedergegeben ist.

Waehrend des Betriebs wird die Drehbewegung des Oeldynamikmotors auf das Antriebsrad der Raupenkette uebertragen und von diesem auf den Stahlkettenring, auf dessen Glieder von aussen die Soh-

- -

len 12 angebolzt sind, die mit Rippen 13 versehen sind, die in die Furchensohle 14 eindringen, die vom Pflug gezogen wird und somit die Schubbewegung auf den Pflug uebertragen.

Die Raupenkette wird durch den Schlitten 15 von der Furchensohle auf angebrachte Entfernung gehalten, damit der untere Teil der Raupenkette nicht teilweise in die Furchensohle eindringt und so bei der Vorwaertsbewegung eine betraechtliche Reibung erzeugt, die ganz oder zum Teil den Schub der Raupenkette aufheben wuerde.

Die Ausladung des Schlittens vom unteren Teil der Raupenkette ist regulierbar, um je nach Ackerbodenart und gewuenschter Furchentiefe die besten Arbeitsbedingungen zu schaffen. Das Beispiel einer Ausfuehrung, die auf den beiliegenden Zeichnungen wiedergegeben ist, ist besonders vorteilhaft, weil die Raupenkette auch in Furchen, die verhaeltnismaessig eng sind, arbeiten kann. Die Anpassung wird durchgefuehrt, in dem die Ausmasse des Antriebrads geaendert werden und das des Raupenspannrads, wodurch betraechtlich reduziert Ausmasse erreicht werden koennen, unter denen die Raupenkette vorzugsweise durch eine gezahnte Trommel ersetzt wird.

Falls die Raupenkette dagegen in vertikaler Position arbeitete, d.h. mit den Reibungsrippen, die auf dem Furchenboden arbeiten, wuerde die Transmission der Bewegung - da sie seitlich erfolgen muesste - eine breitere Furche erfordern trotz gleicher von den einzelnen Sohlen bearbeiteter Oberflaeche.

In diesen beiden Faellen ist die Schubaktion axial zum Pflug und daher besonders vorteilhaft im Gegensatz zu der, die sich ergeben wuerde, wenn die Raupenkette seitlich neben dem Pflug gesetzt werden wuerde, wodurch eine Kraeftepaar erzeugt werden wuerde, das den Pflug um sich selbst drehen lassen wuerde und

- -

ausserdem ein Regulierungssystem fuer die Hoehe der Raupenkette zum unteren Teil des Pflugs noetig waere, um die verschiedenen Ackertiefen zu ermoeglichen.

Die Zeichnungen auf dem beiliegenden Blatt geben eine der moeglichen Anbringungen der Erfindung wieder sowie die entsprechenden Einzelheiten, wie die einzelnen Loesungen weitgehend variiert werden koennen, ohne jedoch das Bereich des Konzepts selbst dieser Erfingung zu verlassen.

- - - - - - - - - -

- -

PATENTANSPRUECHE

1) Plug mit mechanischem Schub charakterisiert durch eine Raupenkette - oder gleichwertigem gezahnten Werk -, die in Drehung versetzt wird durch einen Oeldynamik-Motor, der von der Anlage der Zugmaschine aus betrieben wird, von der die Erfindung gezoegen ist, oder durch eine mechanische Transmission, die die Bewegung ueber den Kurbeltrieb der Zugmaschine erhaelt, direkt oder ueber einen entsprechenden Geschwindigkeitsregler und so dem Pflug einen Schub erteilt, an den dieser Schubmechanismus angebracht ist, um so die Belastung auf den Kurbeltrieb oder Verbindungsdispositiv zwischen Zugmaschine und Pflug zu reduzieren, ausserdem auch den Kraftaufwand seitens der Zugmaschine auf den Ackerboden zu reduzieren und somit bei gleicher Leistung den Einsatz von leichteren Zugmaschinen zu ermoeglichen und das moegliche Abrutschen derselben auf dem Ackerboden zu begrenzen.

2) Pflug mit Schubmechanismus, siehe Pat.an. 1), bei dem die die Schubvorrichtung vorzugsweise eine Raupenkette ist, die in Funktion von der Dimension der von dem Pflug gezogenen Furche verschiedene Groessen annehmen kann und - wo noetig - zu einer gezahnten Trommel oder entsprechenden Vorrichtung reduziert werden kann, die vorzugsweise hinter dem Pflug arbeitet ohne hierdurch jedoch eine seitliches Anbringen auszuschliessen, das aufgrund von Einsatzerfordernissen noetig sein sollte.

3) Pflug mit Schubmechanismus, siehe Pat.an. 1) und 2), dessen Raupenkette - oder entsprechendes Zahnwerk - vorteilhaft auch horizontal arbeitet und die Zaehne oder Rippen am Furchenboden arbeiten, waehrend ein passender Schlitten mit regulierbarer Hoeheneinstellung die Raupenkette oder gleichwertiges Zahnwerk stuetzt, die ueber dem Furchenboden haengt und so Reibungen bei der Vorwaertsbewegung vermeidet waehrend die Zaehne oder Rippen mehr oder weniger vorspringend von der Richtung der Verschleissplatte sein koennen, die bei dieser Erfindung sich auf nur den Teil neben der Pflugschar reduziert und so auch eine Reduzierung der Reibungen erzielt.

4) Pflug mit Schubmechanismus, siehe Pat.an. 1), 2) und 3), bei dem die Raupenkette auch vertikal orientiert werden kann, die am Boden der Furche arbeitet und wie ein hinteres Antriebsrad wirkt; die Raupenkette sollte vorzugsweise zwischen der Schubplatte und der Streichplatte angebracht werden.

5) Pflug mit Schubmechanismus, wie vorangegangene Patentansprueche, dessen Teile, d.h. Pflug und Schubmechanismus selbst vorzugsweise mit Bolzen verbunden sind, damit eine schnelle Anbringung des Schubmechanismus an jede Art von Pflug moeglich ist und eine Austauschbarkeit desselben, um so das Geraet an besondere Arbeitsanforderungen anzupassen.

Alles so wie vorangehend knapp zusammengefasst beschrieben und in den Zeichnungen auf dem beiliegenden Blatt indikativ dargestellt.

- -

0017627

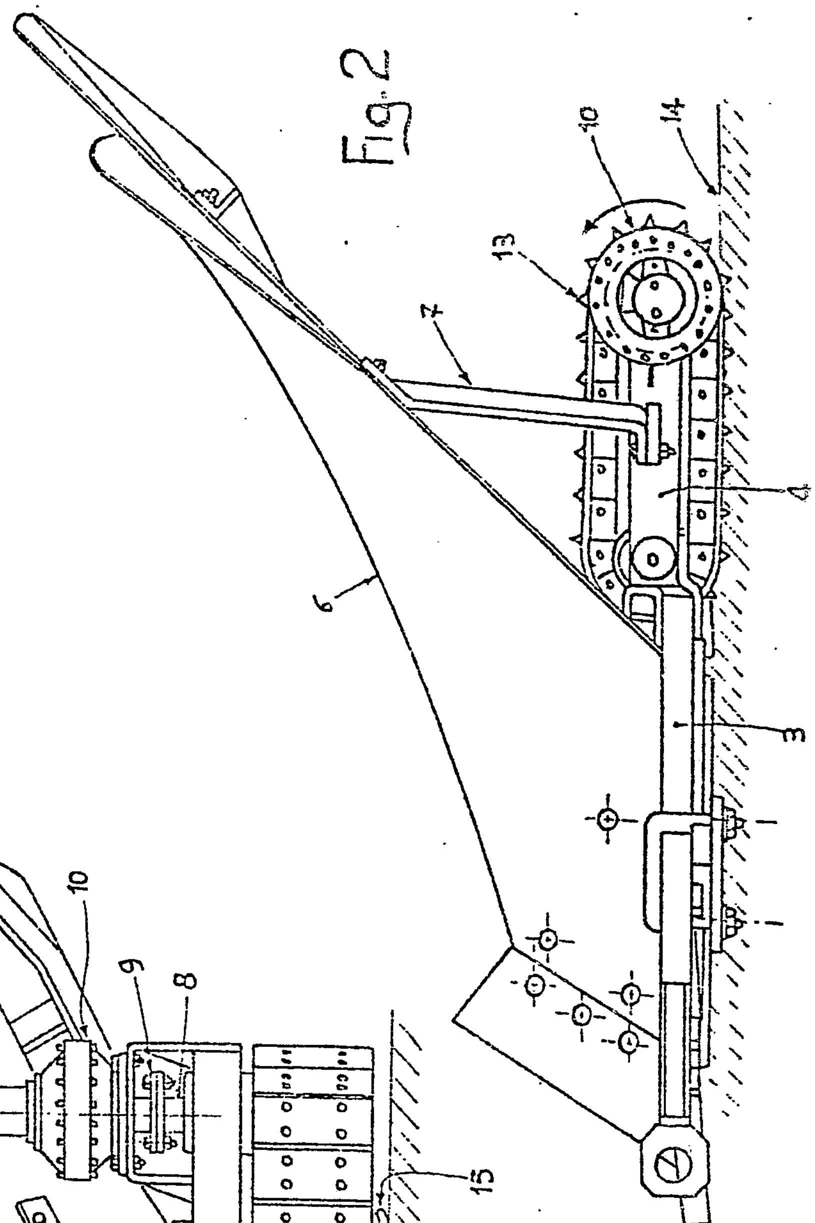


Fig.2

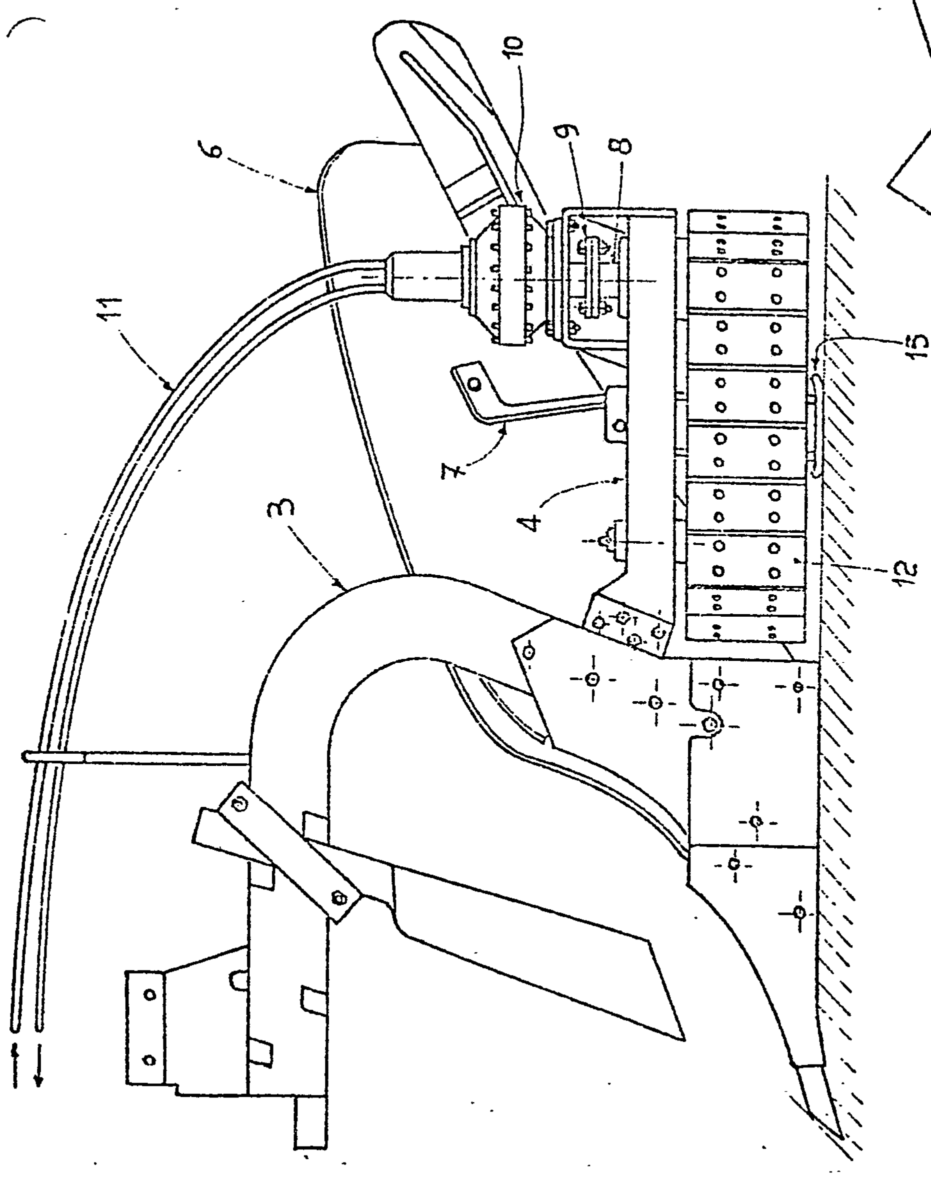


Fig.1

Europäisches Patentamt

# EUROPÄISCHER RECHERCHENBERICHT

Nummer der Anmeldung
EP 80 83 0013

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | DE - C - 349 706 (KUNZ)<br>* Insgesamt *<br>-- | 1,3 | A 01 B 15/00 |
| | US - A - 1 450 385 (PRINCE)<br>* Seite 1, Zeilen 89-110; Seite 2, Zeilen 1-130; Seite 3, Zeilen 1-41; Figuren 1-3 *<br>-- | 2,4,5 | |
| | US - A - 1 404 882 (MOORE)<br>* Insgesamt *<br>-- | 2,4,5 | RECHERCHIERTE SACHGEBIETE (Int. Cl. 3) |
| A | DE - C - 367 240 (DEHRMANN)<br>* Insgesamt *<br>-- | 1 | A 01 B |
| A | DE - C - 269 078 (VENTZKI)<br>* Seite 2, Zeilen 63-68; Figur 1 *<br>-- | 1 | |
| | GB - A - 1250 A.D. 1914 (SALTMARSH)<br>* Seite 4, Zeilen 44-48; Figuren 1,2 *<br>-- | 2,4 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | DE - A - 1 937 314 (VOLLWEITER)<br>* Seite 9, Ansprüche 1,2; Figuren 1,2 *<br>-- | 1,2,4 | |
| | DE - B - 2 103 834 (STEYR-DAIMLER-PUGH A.G.)<br>* Insgesamt *<br>-- ./. | 1,4 | &: Mitglied der gleichen Patentfamilie, übereinstimmendes Dokument |

X Der vorliegende Recherchenbericht wurde für alle Patentansprüche erstellt.

| Recherchenort | Abschlußdatum der Recherche | Prüfer |
|---|---|---|
| Den Haag | 18-06-1980 | VERDOODT |

Europäisches Patentamt

# EUROPÄISCHER RECHERCHENBERICHT

Nummer der Anmeldung
EP 80 83 0013



| EINSCHLÄGIGE DOKUMENTE | | | KLASSIFIKATION DER ANMELDUNG (Int. Cl. 3) |
|---|---|---|---|
| Kategorie | Kennzeichnung des Dokuments mit Angabe, soweit erforderlich, der maßgeblichen Teile | betrifft Anspruch | |
| | FR - A - 2 270 771 (ELMSLIE)<br>* Seite 5, Zeilen 4-40; Seite 6, Zeilen 1-39; Seite 7, Zeilen 1-41; Seite 8, Zeilen 1-20; Figuren 1,2,8 *<br>---- | 1,4,5 | |
| | | | RECHERCHIERTE SACHGEBIETE (Int. Cl. 3) |